# EUROPEAN PATENT SPECIFICATION

(11) **EP 0 936 395 B1**
(45) Date of publication and mention of the grant of the patent: **20.11.2002**
(21) Application number: 99200283.2
(22) Date of filing: 01.02.1999
(51) Int. Cl.: F16L 37/24, F16L 37/252

(54) **Bayonet connector assembly for a fluid line**
Bayonettkupplungsanordnung für eine Flüssigkeitsleitung
Ensemble connecteur à bayonette pour un conduite de fluide

(30) Priority: 11.02.1998 NL 1008274
(43) Date of publication of application: 18.08.1999
(73) Proprietor: Actuant Corporation, Glendale, Wisconsin 53209-3703 (US)
(72) Inventor: van Meerveld, Marten, 7557 ER Hengelo (NL)
(74) Representative: Brookhuis, Hendrik Jan Arnold

(56) References cited:
- EP-A- 0 186 614
- DE-U- 9 314 195
- FR-A- 1 504 861
- US-A- 2 034 933

## Description

The present invention relates to a bayonet connector assembly for establishing a connection between a fluid line and a connecting member, in particular a connection between a hydraulic pressure line and a hydraulic component, such as, for example, a hydraulic cylinder, a hydraulic pump or a valve block.

Such a bayonet connection between a fluid line and a connecting memeber is generally known, for example from EP 0 375 666.

This known bayonet connection has the drawback that it is undesirably complicated to produce. This is because in this known bayonet connection slots are formed in the connecting member for receiving the diametrally opposite locking projections of the fitting arranged on the fluid hose. These slots lie along the insertion bore and each have a first slot part which extends in the insertion direction and is adjoined by a second slot part which is blind and extends at right angles to the insertion direction. Forming slots of this nature in the object member causes the cost price to become undesirably high. The present invention aims to eliminate the abovementioned drawback and, in particular, to provide a bayonet connection which can be achieved at considerably less expense than the known connection. The invention also aims to provide a right-angled connection between a fluid line and an object, wherein the fluid line projects to the minimum possible extent beyond the object.

The present invention provides a bayonet connector assembly according to claim 1.

The invention therefore provides for arranging a recess in the connecting member, e.g the gland of a hydraulic cilinder, and fixing a cap, which is to be produced separately, in the said recess. The cap and the recess are preferably of circular design. The cap can be easily and reliably fixed to the connecting member by providing the cap with an outwardly projecting attachment flange and clamping this attachment flange in by pressing the surrounding area of the connecting member over it. The cap is easy to produce. For example, it is possible to produce the cap using the known metal injection-moulding process. The fitting which is to be attached to the fluid line can also be produced using this same process.

Further advantageous embodiments of the invention are described in the claims and in the following description, in which the invention will be explained in more detail with reference to the drawing, in which:
Fig. 1 shows a diagrammatic, perspective view of the components of a first exemplary embodiment of the bayonet connector assembly according to the invention, in an application in which a hydraulic hose is being connected to the gland of a hydraulic cylinder,
Fig. 2 shows a partial longitudinal section through the gland of a hydraulic cylinder and a right-angled hose fitting in accordance with Fig. 1 which is connected thereto,
Fig. 3 shows a view which corresponds to that shown in Fig. 2 of a second exemplary embodiment of the bayonet connection according to the invention.

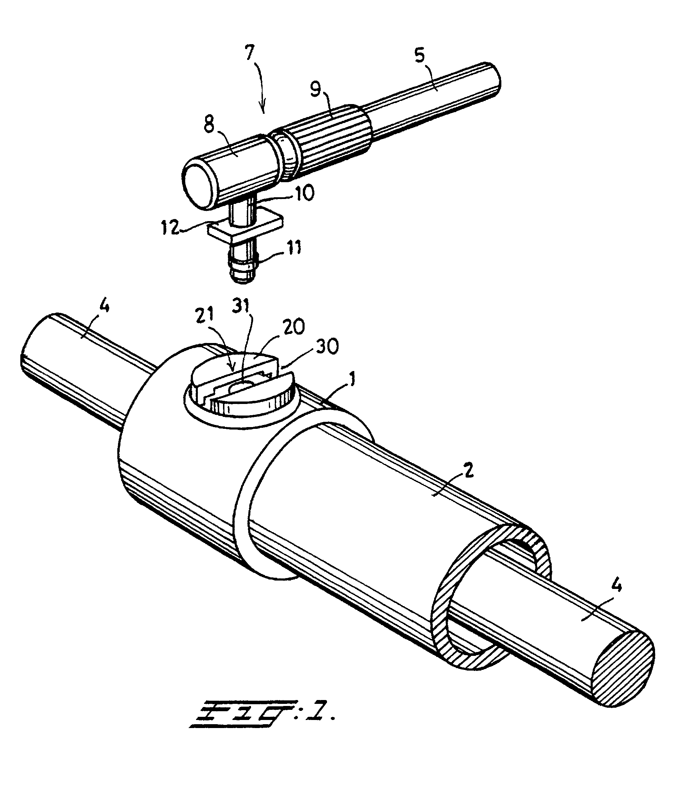

Figures 1, 2 and 3 show a metal gland 1 also known as end cover of a linear hydraulic cylinder, only part of which is shown in Figure 1. The gland 1 is attached in a suitable manner to the cylinder tube 2 of the cylinder and has a central axial bore 3 through which the piston rod 4 of the cylinder fits.

A bayonet connection is used to connect the piston-rod-side working chamber of the cylinder to a hydraulic hose 5. For this purpose, an insertion bore 6, which in this case is at right angles to the central bore 3, is formed in the gland 1. The insertion side or entrance of the insertion bore 6 lies on the cylindrical outer surface of the gland 1.

The hydraulic hose 5 is provided with a metal right-angled fitting 7 having a hose connector body 8 to which the hose 5 is fixed in a manner known per se using a sleeve 9 which is crimped on the hose 5. A substantially cylindrical insertion part 10 of the fitting 7 adjoins the hose connector body 8, the insertion part 10 being directed at right angles to the hose connector body 8. At a distance from the free end of the insertion part 10, there is a groove in which a sealing ring 11 is accommodated. Two locking projections 12 which project diametrally outwards with respect to the insertion part 10 are formed on the fitting 7 at a greater distance than the groove of the sealing ring 11 from the free end of the insertion part 10. Preferably, the fitting 7 is produced using the metal injection-moulding process, so that the fitting 7 has a unitary metal body. A production process of this nature is particularly preferable if the dimensions of the fitting 7 are small.

The gland 1 is provided, on the insertion side of the insertion bore 6, with a circular recess 15 which has a circumferential surface 16 and an annular base surface 17, the base surface 17 forming the transition between the circumferential surface 16 of the recess 15 and a part of the insertion bore 6 which has a diameter which is matched to the diameter of the insertion part 10. This latter diameter of the insertion bore 6 is such that the sealing ring 11 fits in with the appropriate sliding fit desired for a liquid seal.

A circular cap 20 which is provided with a passage opening 21 for the fitting 7 provided with locking projections 12 is fixed in the recess 15. In this case, the base surface 17 of the recess 15 and the opposite underside of the cap 20 form a chamber. The passage opening 21 and this chamber are such that it is possible for the fitting 7, in its insertion position which is shown in Figure 1, to fit into the insertion bore 6 until the locking projections lie below the level of the underside of the cap 20, and then for the fitting 7 to be rotated through a quarter turn into a locked position thereof, in which the locking projections 12 are covered by the cap 20 and the fitting 7 cannot be pulled out of the insertion bore 6.

In this case, the cap 20 has an annular wall 23 with an external diameter which is smaller than the diameter of the recess 15 and an internal diameter which is greater than the diameter of the fitting 7 at the level of the locking projections 12. An outwardly projecting attachment flange 24, the thickness of which is less than the depth of the recess 15 in the gland 1, is provided on the underside of the annular wall 23. The attachment flange 24 is clamped in between the base surface 17 of the recess 15 and parts of the edge region, lying around the recess 15, of the gland 1 which are pressed over the attachment flange 24. For this attachment, it is preferable for an annular ram to be placed on the said metal annular region of the gland 1 and then for a considerable pressure to be applied, so that the edge region of the gland 1 which projects above the attachment flange 24 of the cap 20 is plastically deformed and pressed over the attachment flange 24.

The cap 20 furthermore has an end wall 25 which spans the top side of the annular wall 23 and is provided with the passage opening 21 for the fitting 7. The cap 20 is preferably made from metal using the metal injection-moulding process.

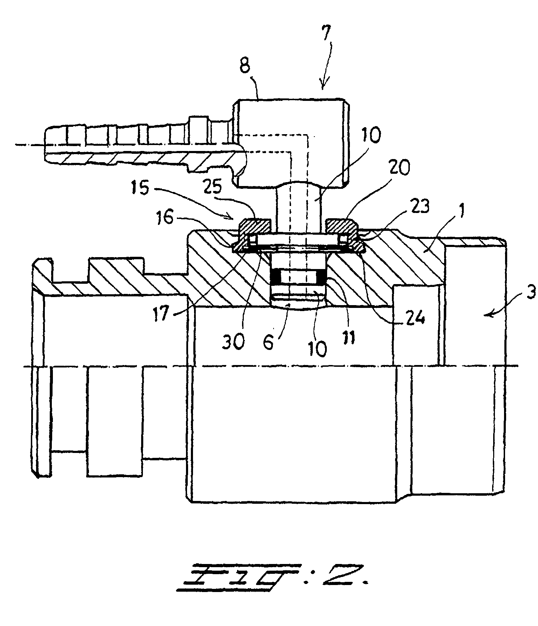

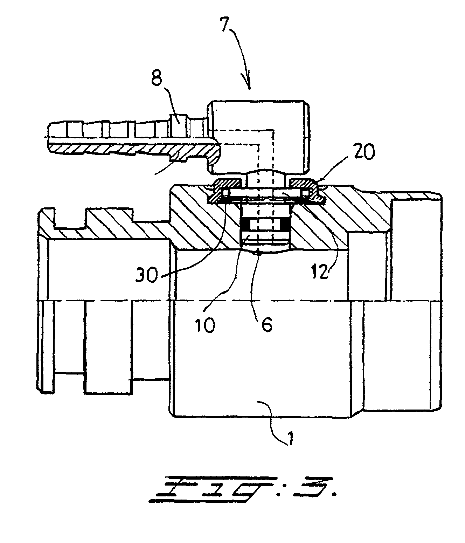

Figures 2 and 3 furthermore show an annular spring 30 which can be compressed elastically in the insertion direction and bears against the base surface 17 of the recess 15. The spring 30, which is preferably formed from a thin strip of spring steel which is suitably corrugated, serves to press the locking projections 12 of the fitting 7, especially in the locked position, towards the underside of the cap 20. In this case, a securing recess 31, into which the locking projection 12 moves, under pressure from the spring 30, in the locked position of the fitting 7, is formed on the underside of the cap 20 for each locking projection 12 of the fitting 7. Preferably, the spring 30 is enclosed between the cap 20 and the gland 1.

The embodiment shown in Figure 3 differs from the design shown in Figure 2 only by the fact that the distance between the locking projections 12 and the hose connector body 8 of the fitting 7 is shorter than in Figure 2. This distance is such that, in the fitted position, the hose connector body 8 virtually bears against the top side of the cap 20, the slight clearance serving to allow the fitting 7 to be pressed slightly into the insertion bore 6 counter to the spring force, in order to be able to release the locking projections 12 from the securing recesses in the cap 20. As a result, a hydraulic hose which is to be connected to the right-angled fitting 7 lies close to the cylinder in the longitudinal direction, so that the complete assembly does not take up much space.

It will be clear that it is also possible for the annular gland 1 to be provided, at the location of the insertion bore 6, with a recess in the form of a shallow flat instead of a circular recess. In this case too, a suitably shaped, substantially rectangular cap can be fixed on by pressing the adjoining edge regions of the gland 1 over the cap.

If the cap 20 is designed to be slightly elastically deformable, the spring 30 can be dispensed with. In this case, the above-described securing action of the cap 20 can be obtained if the chamber between the cap 20 and the base surface 17 is slightly smaller than the thickness of the locking projections 12, so that the cap 20 has to expand outwards in order to allow the locking projections to move past when the fitting 7 is rotated into the locked position.

In another embodiment of the bayonet connection according to the invention (not shown), the cap is of rigid design and the locking projections of the fitting are of elastic design, so that in the absence of the spring described here the locking projections are deformed elastically when the fitting is rotated into the locked position, so that the fitting is secured in this position.

## Claims

1. Bayonet connector assembly for connection of a fluid line, said connector assembly comprising a fitting (7) which is connectable to a fluid line and is provided with a substantially cylindrical insertion part (10), said insertion part (10) having at a distance from its axial end one or more locking projections (12) which project outwards, said connector assembly further comprising a connecting body which is provided with an insertion bore (6) for receiving the insertion part (10) of the fitting, the connecting body being adapted for receiving the insertion part of the fitting (7) in an insertion position thereof relative to the connecting body and for a subsequent relative rotation of the fitting with respect to the connecting body into a locked position of the fitting, so that the fitting is secured against being pulled out of the insertion bore, the connecting body being provided, at the entrance of the insertion bore (6), with a recess (15) which has a circumferential surface and an annular base surface (17), the internal dimension of the circumferential surface (16) being greater than the diameter of the fitting at the level of the locking projections (12), and the base surface (17) forming a transition between the circumferential surface of the recess and a part of the insertion bore (6) which has a diameter which is adapted to slidingly receive the insertion part (10), **characterised in that** a cap which fits into the recess is fixed in the latter, which cap is provided with a passage opening for the fitting provided with locking projections, the base surface of the recess (17) and the opposite underside of the cap delimiting a chamber which allows the fitting to be rotated into the locked position in which the locking projections (12) are covered by the cap.

2. Connector assembly according to claim 1, in which the base surface of the recess and the underside of the cap, at at least one position, define a narrowed section in the chamber with a passage cross section which is smaller than the largest dimension of that section of a locking projection of the fitting which moves past the said narrowed section when the fitting is being moved into the locked position, the cap being elastically deformable in order for the locking projection to move past the narrowed section.

3. Connector assembly according to claim 1, in which the distance from the base surface to the underside of the cap is such that it is possible for the locking projections to move past without hinderance when the fitting is being moved into the locked position, and in which connection an elastically compressible spring member is situated in the chamber, which spring member, in the mounted position of the connection, lies between the base surface and the locking projections and presses the locking projections towards the underside of the cap.

4. Connector assembly according to claim 2 or 3, in which a securing recess is provided on the underside of the cap for each locking projection, for the purpose of accommodating the locking projection in the locked position of the fitting.

5. Connector assembly according to claim 3, in which one or more securing elevations, which are directed towards the base surface, are provided on the underside of the cap for each locking projection, which securing elevations, in the locked position of the fitting, secure the locking projection so that it cannot rotate.

6. Connector assembly according to one or more of the preceding claims, in which the cap is attached in the connection member by deforming parts of the connection member which lie around the cap.

7. Connector assembly according to claim 6, in which the cap has an annular wall with an external diameter which is smaller than the diameter of the recess and an internal diameter which is greater than the diameter of the fitting at the level of the locking projections, an outwardly projecting attachment flange, the thickness of which is less than the depth of the recess in the connection member, being provided on the underside of the annular wall, and the attachment flange being clamped in between the base surface of the recess and those parts of the connection member which are pressed over the attachment flange, and the cap furthermore having an end wall which spans the top side of the annular wall and is provided with the passage opening for the fitting.

8. Connector assembly according to claim 3, in which the spring is clamped in between the cap and the base surface of the recess.

9. Connector assembly according to one or more of the preceding claims, in which the fitting is a right-angled fitting with a hose connector body and the insertion part directed at a right angle thereto, the distance between the locking projections and the hose connector body being such that, except for a slight clearance, the hose connector body lies along the top side of the cap in the locked position of the fitting.

## Patentansprüche

1. Bajonett-Verbinderanordnung zur Verbindung einer Fluidleitung, wobei die Verbinderanordnung ein Anschlußstück (7) aufweist, das mit einer Fluidleitung verbindbar ist und ein im wesentlichen zylindrisches Einführteil (10) aufweist, wobei das Einführteil (10) in einem Abstand von seinem axialen Ende eine oder mehrere Verriegelungsvorsprünge (12) aufweist, die nach außen vorstehen, wobei die Verbinderanordnung ferner einen Verbinderkörper aufweist, der mit einer Einführbohrung (6) versehen ist, um das Einführteil (10) des Anschlußstückes aufzunehmen, wobei der Verbinderkörper zur Aufnahme des Einführteils des Anschlußstückes (7) in einer Einführposition davon in bezug auf den Verbinderkörper ausgebildet ist, sowie für eine nachfolgende relative Drehung des Anschlußstückes in bezug auf den Verbinderkörper in eine verriegelte Position des Anschlußstükkes, so daß das Anschlußstück gegen ein Herausziehen aus der Einführbohrung gesichert ist, wobei der Verbinderkörper an dem Eingang der Einführbohrung (6) mit einer Ausnehmung (15) versehen ist, die eine Umfangsfläche und eine ringförmige Basisfläche (17) aufweist, wobei die Innendimension der Umfangsfläche (16) größer als der Durchmesser des Anschlußstückes auf der Höhe der Verriegelungsvorsprünge (12) ist, und wobei die Basisfläche (17) einen Übergang zwischen der Umfangsfläche der Ausnehmung und einem Teil der Einführbohrung (6) bildet, die einen Durchmesser aufweist, der zur gleitenden Aufnahme des Einführteils (10) geeignet ist, **dadurch gekennzeichnet, daß** eine Kappe, die in die Ausnehmung paßt, in der letzteren fixiert ist, wobei die Kappe mit einer Durchlaßöffnung für das mit den Verriegelungsvorsprüngen versehende Anschlußstück versehen ist, wobei die Basisfläche der Ausnehmung (17) und die gegenüberliegende Unterseite der Kappe eine Kammer begrenzen, die es erlaubt, das Anschlußstück in die verriegelte Position zu drehen, in der die Verriegelungsvorsprünge (12) von der Kappe bedeckt sind.

2. Verbinderanordnung nach Anspruch 1, bei der die Basisfläche der Ausnehmung und die Unterseite der Kappe in wenigstens einer Position einen verengten Abschnitt in der Kammer definieren, mit einem Durchlaßquerschnitt, der kleiner als die größte Dimension des Abschnittes eines Verriegelungsvorsprungs des Anschlußstückes ist, das sich über den verengten Abschnitt hinaus bewegt, wenn das Anschlußstück in die verriegelte Position bewegt wird, wobei die Kappe elastisch deformierbar ist, um dem Verriegelungsvorsprung eine Bewegung über den verengten Abschnitt hinaus zu erlauben.

3. Verbinderanordnung nach Anspruch 1, bei der der Abstand zwischen der Basisfläche zur Unterseite der Kappe derart ist, daß die Verriegelungsvorsprünge ohne Behinderung hindurchbewegt werden können, wenn das Anschlußstück in die verriegelte Position bewegt wird, und wobei in der Verbindung ein elastisch komprimierbares Federelement in der Kammer vorgesehen ist, wobei das Federelement in der montierten Stellung der Verbindung zwischen der Basisfläche und den Verriegelungsvorsprüngen liegt und die Verriegelungsvorsprünge gegen die Unterseite der Kappe drückt.

4. Verbinderanordnung nach Anspruch 2 oder 3, bei der eine sichernde Ausnehmung an der Unterseite der Kappe für jeden Verriegelungsvorsprung zum Zweck der Aufnahme des Verriegelungsvorsprungs in der verriegelten Position des Anschlußstückes vorgesehen ist.

5. Verbinderanordnung nach Anspruch 3, bei der eine oder mehrere sichernde Erhebungen, die der Basisfläche zugewandt sind, an der Unterseite der Kappe für jeden Verriegelungsvorsprung vorgesehen sind, wobei die sichernden Erhebungen in der verriegelten Position des Anschlußstückes den Verriegelungsvorsprung sichern, so daß er sich nicht drehen kann.

6. Verbinderanordnung nach einem oder mehreren der vorhergehenden Ansprüche, bei der die Kappe in dem Verbinderelement mittels deformierbarer Teile des Verbinderelementes, die sich um die Kappe herum erstrecken, befestigt ist.

7. Verbinderanordnung nach Anspruch 6, bei der die Kappe eine ringförmige Wand mit einem Außendurchmesser besitzt, der kleiner als der Durchmesser der Ausnehmung ist und einen Innendurchmesser aufweist, der größer als der Durchmesser des Anschlußstückes auf der Höhe der Verriegelungsvorsprünge ist, wobei ein nach außen vorstehender Befestigungsflansch, dessen Dicke geringer als die Tiefe der Ausnehmung in dem Verbinderelement ist, auf der Unterseite der ringförmigen Wand vorgesehen ist, und wobei der Befestigungsflansch zwischen der Basisfläche der Ausnehmung und denjenigen Teilen des Verbinderelementes eingespannt ist, die auf den Befestigungsflansch gedrückt werden, und wobei die Kappe ferner eine Endwand aufweist, die die Oberseite der ringförmigen Wand überdeckt und mit der Durchlaßöffnung für das Anschlußstück versehen ist.

8. Verbinderanordnung nach Anspruch 3, bei der die Feder zwischen der Kappe und der Basisfläche der Ausnehmung eingespannt ist.

9. Verbinderanordnung nach einem oder mehreren der vorhergehenden Ansprüche, bei der das Anschlußstück ein rechtwinkliges Anschlußstück mit einem Schlauchverbinderkörper ist, wobei das Einführteil in einem rechten Winkel dazu ausgerichtet ist, wobei der Abstand zwischen den Verriegelungsvorsprüngen und dem Schlauchverbinderkörper derart ist, daß, abgesehen von einem leichten Spiel, der Schlauchverbinderkörper entlang der Oberseite der Kappe in der verriegelten Position des Anschlußstükkes liegt.

## Revendications

1. Ensemble connecteur à baïonnette pour la liaison d'un circuit de fluide, ledit ensemble connecteur comprenant un raccord (7) qui est susceptible d'être relié à un circuit de fluide et est muni d'une partie d'insertion (10) sensiblement cylindrique, ladite partie d'insertion (10) comportant à une distance de son extrémité axiale une ou plusieurs saillies de verrouillage (12) qui font saillie vers l'extérieur, ledit ensemble connecteur comprenant en outre un corps de liaison qui est muni d'un alésage d'insertion (6) pour recevoir la partie d'insertion (10) du raccord, le corps de liaison étant apte à recevoir la partie d'insertion du raccord (7) dans une position d'insertion de ce raccord par rapport au corps de liaison et pour la rotation relative subséquente du raccord par rapport au corps de liaison dans une position verrouillée du raccord, de sorte que le raccord soit fixé fermement à l'encontre d'une traction tendant à le tirer hors de l'alésage d'insertion, le corps de liaison étant muni, à l'entrée de l'alésage d'insertion (6), d'une cavité (15) qui présente une surface circonférencielle et d'une surface annulaire de base (17), la dimension intérieure de la surface circonférencielle (16) étant supérieure au diamètre du raccord au niveau des saillies de verrouillage (12), et la surface de base (17) formant une transition entre la surface circonférencielle de la cavité et une partie de l'alésage d'insertion qui présente un diamètre qui est apte à recevoir de façon coulissante la partie d'insertion (10), **caractérisée en ce qu'**un capuchon qui s'ajuste dans la cavité est fixé dans cette dernière, lequel capuchon est muni d'une ouverture de passage s'ouvrant pour le raccord et muni de saillies de verrouillage, la surface de base de la cavité (17) et la face inférieure opposée du capuchon délimitant une chambre qui permet au raccord d'être tourné dans la position verrouillé dans laquelle les parties en saillie de verrouillage (12) sont recouvertes par le capuchon.

2. Ensemble connecteur selon la revendication 1, dans lequel la surface de base de la cavité et la face inférieure du capuchon, en au moins une position, définissent une section rétrécie dans le chambre avec une section transversale de passage qui est inférieure à la dimension la plus grande de la section d'une saillie de verrouillage du raccord qui se déplace au-delà de ladite section rétrécie lorsque le raccord est en cours de déplacement dans la position verrouillée, le capuchon étant élastiquement déformable afin que la saillie de verrouillage se déplace au-delà de la section rétrécie.

3. Ensemble connecteur selon la revendication 1, dans lequel la distance de la surface de base de la face inférieure du capuchon, est telle qu'il soit possible pour les saillies de verrouillage de se déplacer au-delà sans empêchement lorsque le raccord est déplacé dans la position verrouillée, et dans laquelle liaison un organe élastique élastiquement compressible est situé dans la chambre, lequel organe élastique, dans la position montée de la liaison, se trouve entre la surface de base et les saillies de verrouillage et presse les saillies de verrouillage vers la face inférieure du capuchon.

4. Ensemble connecteur selon la revendication 2 ou 3, dans lequel une cavité de fixation est prévue sur la face inférieure du capuchon pour chaque saillie de verrouillage, dans le but de loger la saillie de verrouillage dans la position verrouillée du raccord.

5. Ensemble connecteur selon la revendication 3, dans lequel une ou plusieurs surélévations de fixation qui sont dirigées vers la surface de base, sont prévues sur la face inférieure du capuchon pour chaque saillie de verrouillage, lesquelles surélévations de fixation, dans la position verrouillée du raccord, fixent fermement la saillie de verrouillage de sorte qu'elle ne puisse tourner.

6. Ensemble connecteur selon l'une ou plusieurs des revendications précédentes, dans lequel le capuchon est fixé dans l'organe de liaison en déformant des parties de l'organe de liaison qui se trouvent autour du capuchon.

7. Ensemble connecteur selon la revendication 6, dans lequel le capuchon comporte une paroi annulaire présentant un diamètre extérieur qui est inférieur au diamètre de la cavité et un diamètre intérieur qui est supérieur au diamètre du raccord au niveau des saillies de verrouillage une bride de fixation en saillie extérieure, dont l'épaisseur est inférieure à la profondeur de la cavité dans l'organe de liaison, étant prévue sur la face inférieure de la paroi annulaire, et la bride de fixation étant pincée entre la surface de base de la cavité et les parties de l'organe de liaison qui sont pressées sur la bride de fixation, et le capuchon comportant en outre une paroi d'extrémité qui enjambe la face supérieure de la paroi annulaire et qui est munie de l'ouverture de passage pour le raccord.

8. Ensemble connecteur selon la revendication 3, dans lequel l'organe élastique est pincé entre le capuchon et la surface de base de la cavité.

9. Ensemble connecteur selon l'une ou plusieurs des revendications précédentes, dans lequel le raccord est un raccord à angle droit avec un corps de tube flexible et la partie d'insertion dirigée à angle droit par rapport au corps de connecteur, la distance entre les saillies de verrouillage et le corps de raccord de tube flexible étant telle, qu'à l'exception d'un léger jeu, le corps de raccord de tube flexible se trouve le long de la face supérieure du capuchon dans la position verrouillée du raccord.
